# EUROPÄISCHE PATENTSCHRIFT

(11) **EP 1 244 857 B1**
(45) Veröffentlichungstag und Bekanntmachung des Hinweises auf die Patenterteilung: **13.04.2011**
(21) Anmeldenummer: 01900012.4
(22) Anmeldetag: 05.01.2001
(51) Int. Cl.: E04B 1/19, A47B 47/00, F16B 7/04

(54) **FUSS ZUR VERWENDUNG MIT EINEM WÜRFELFÖRMIGEN PROFILELEMENT**
FOOT FOR USE WITH A CUBE-SHAPED PROFILE ELEMENT
PIED POUR USAGE AVEC UN ELEMENT CUBIQUE POUR PROFILES

(30) Priorität: 05.01.2000 CH 20002000
(43) Veröffentlichungstag der Anmeldung: 02.10.2002
(73) Patentinhaber: SYMA INTERCONTINENTAL AG, CH-9533 Kirchberg (CH)
(72) Erfinder: STRÄSSLE, Marcel, CH-9533 Kirchberg (CH); ZÜLLIG, Kurt, CH-9533 Kirchberg (CH)
(74) Vertreter: Liebetanz, Michael
(86) Internationale Anmeldenummer: PCT/CH2001/000006
(87) Internationale Veröffentlichungsnummer: WO 2001/049950

(56) Entgegenhaltungen:
- EP-A- 0 361 039
- WO-A-97/41319
- DE-A- 3 620 379
- DE-U- 29 823 124
- US-A- 5 051 019
- US-A- 5 803 782

## Beschreibung

Die Erfindung betrifft einem Fuss für ein würfelförmiges Profilelement mit sechs gleichen Seitenflächen, gemäss Oberbegriff des Patent-anspruchs 1.

Aus dem Stand der Technik sind verschiedene Profilelemente bekannt, die die Konstruktion von beispielsweise Messeständen in modularer Bauweise ermöglichen. Dabei sind jedoch eine grössere Anzahl verschiedener Bauelemente notwendig, um sämtliche Gestaltungswünsche erfüllen zu können. Darüber hinaus ist vielen Elementen die Technizität anzusehen und sie bilden an und für sich keine den Betrachter ansprechende Optik.

Ein Fuss zur Verwendnung mit einem sdehen Profilelement ist aus der US 5,0151,019 A bekannt.

Ausgehend von diesem Stand der Technik liegt der Erfindung die Aufgabe zugrunde, Bauelemente anzugeben, die besser geeignet sind, Modularität, Standfestigkeit und die damit verbundene Stabilität der Bauwerke mit einer ansprechenden Optik zu verbinden.

Demgemäss wird erfindungsgemäss ein Fuss zur Verwendung mit einem würfelförmigen Profilelement angegeben. Der Fuss verfügt über zwei deckungsgleiche achteckige Platten, wobei an der unteren Bodenplatte eine Gewindestange befestigt ist. Die obere der Platten weist eine zentrale Bohrung mit einem Innengewinde auf, so dass diese auf die Gewindestange aufschraubbar ist. Die obere der Platten verfügt über mindestens einen Rasthaken, der in einen vorbestimmten Schlitz eines würfelförmigen Profilelementes einrastbar ist, um durch ein Drehen der Platten gegeneinander eine Höheneinstellung des würfelförmigen Profilelementes gegenüber dem Boden zu ermöglichen, auf dem sich die Bodenplatte des Fusses abstützt.

Vorzugsweise sind bei einem würfelförmigen Profilelement in diesem jeweils mindestens zwei Schlitze vorgesehen die einander diametral gegenüber bezüglich der Symmetrieachse der Seitenfläche angeordnet sind, durch die sich hinter die Seitenfläche einhakbare Verschlusselemente einführbar sind.

Vorzugsweise ist das Profilelement hohl und besteht aus sechs identischen, die Seitenflächen bildenden Platten. Dabei ist bei einer bevorzugten Ausführungsform jede Platte achteckig mit Kanten, wobei nur die einen Kanten jeder Platte mit einer benachbarten Platte zusammenstossen und die anderen Kanten jeweils einen Durchbruch an den Ecken des würfelförmigen Profilelementes bilden.

Eine Profilleiste zur Verwendung mit einem würfelförmigen Profilelement ist dadurch gekennzeichnet, dass die Profilleiste kreuzförmig ist und an ihren Enden über vier, zur Längsachse der Profilleiste symmetrisch in den Kreuzenden angeordnete Hohlräume zur Aufnahme von Verschlüssen aufweist, mit denen die Profilleiste über die Schlitze des würfelförmigen Profilelementes mit diesem verbindbar ist.

Weitere vorteilhafte Ausführungsformen sind in den Unteransprüchen dargestellt.

Die Erfindung wird nun beispielhaft unter Bezugnahme auf die beigefügten Zeichnungen beschrieben. Es zeigen:
- Fig. 1: ein würfelförmiges Profilelement oder Knoten,
- Fig. 2: eine erste Profilleiste mit einem eingeschobenen Verschluss zur Verbindung mit einem Knoten nach Fig. 1,
- Fig. 3: eine weitere Profilleiste mit einem eingeschobenen Verschluss zur Verbindung mit einem Knoten nach Fig. 1,
- Fig. 4: eine Draufsicht auf einen Knoten nach Fig. 1,
- Fig. 5: eine Seitenfläche eines Knotens nach Fig. 1 in der Draufsicht,
- Fig. 6: eine Explosionsansicht verschiedener mit dem Knoten nach Fig. 1 zu kombinierender Profilelemente,
- Fig. 7: weitere Einsatzmöglichkeiten für den Knoten nach Fig. 1,
- Fig. 8: einen Verschluss zur Verbindung von einem Knoten nach Fig. 1 mit einer Profilleiste nach Fig. 2 oder Fig. 3,
- Fig. 9: einen Fuss zur Verbindung mit einem Knoten nach Fig. 1 zum Aufstellen auf einem Boden,
- Fig. 10: eine weitere Profilleiste mit Klemmprofilen nach Fig. 6 in einer vergrösserten Draufsicht,
- Fig. 11: Teilansicht einer Raumstruktur mit zwei dargestellten Knoten, und
- Fig. 12: Teilansicht einer Raumstruktur mit einem, einen dargestellten Knoten aufweisenden Pfosten.

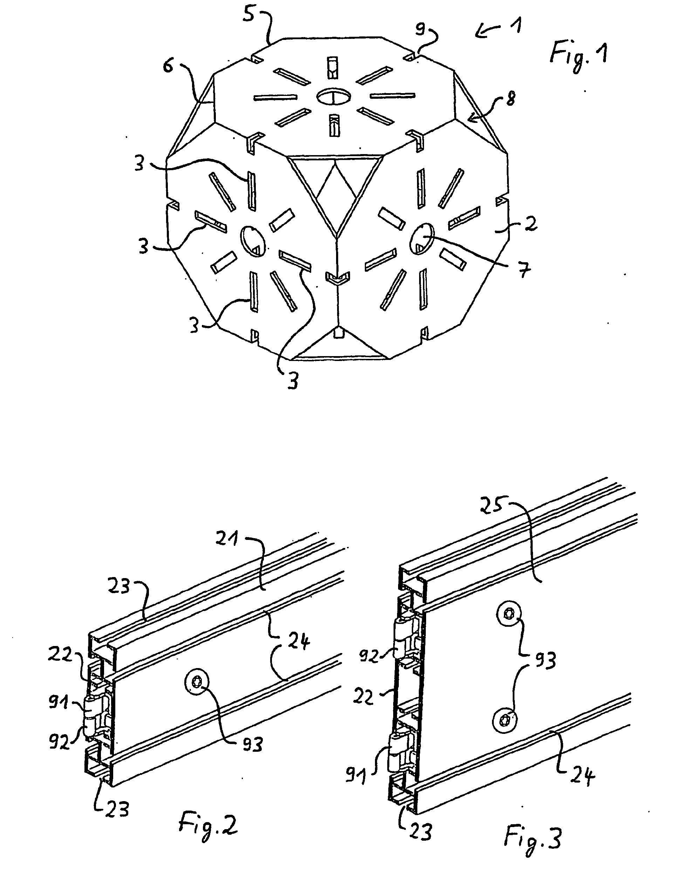

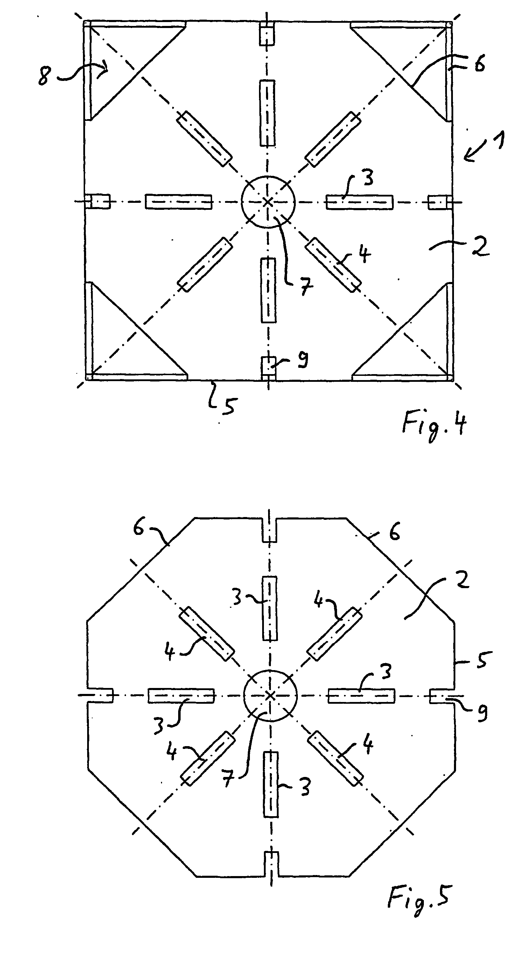

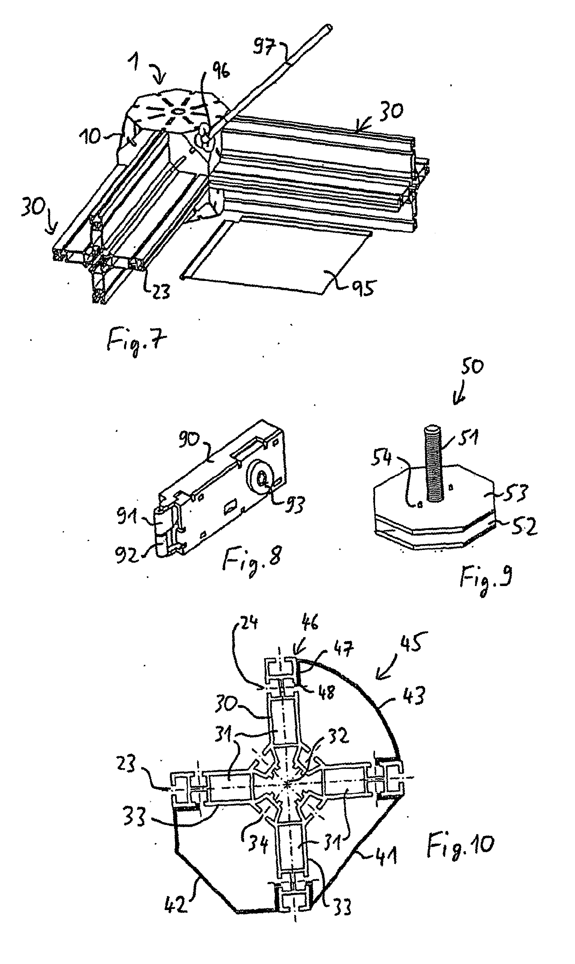

Die Fig. 1 zeigt ein würfelförmiges Profilelement, welches im folgenden Knoten genannt und mit dem Bezugszeichen 1 bezeichnet werden wird. Im dargestellten Ausführungsbeispiel ist der Knoten 1 hohl und besteht aus sechs jeweils parallel zueinander parallelen Seitenflächen 2, die jeweils identisch aufgebaut sind und in der Fig. 5 näher beschrieben werden. Wesentlich ist das Vorsehen von mindestens zwei punktsymmetrisch zueinander liegenden Schlitzen, von denen vorteilhafter Weise vier vorgesehen sind, die die Bezugszeichen 3 tragen. Die Schlitze 3 sind dafür ausgelegt, die Klemmhaken 91, 92 von Verschlüssen 90 entsprechend Fig. 8 aufzunehmen.

Für einen besonders vielseitigen Einsatz der Knoten 1 sind noch vier weitere Schlitze 4 vorgesehen, die jeweils in einem Winkel von 45 Grad zu den Schlitzen 3 stehen.

Der Knoten 1 besteht wie erwähnt aus sechs gleichen Flächen 2, die an jeder ihrer vier Kanten 5 jeweils mit einer benachbarten Würfelfläche verbunden sind. Die Kanten 5 nehmen nicht die vollständige Breite der Flächen 2 ein, die beispielsweise 120 Millimeter betragen kann. In der Fig. 5 ist gut zu erkennen, dass die Fläche 2 in dieser Ausführungsform ein Achteck ist, das somit vier Eckkanten 6 aufweist. Mit der gestrichelten Linie hinter der Kante 5 ist angedeutet, dass die Kante 5 keine Fläche senkrecht zur Fläche der Platte 2 bildet, sondern vielmehr hinterschnitten ist, um zwei Platten 2 in symmetrischer Weise rechtwinklig miteinander verbinden zu können. Diese Verbindung kann beispielsweise jeweils eine Schweissverbindung oder eine Hartlötverbindung sein. Zentral in jeder Fläche 2 ist eine Bohrung 7 vorgesehen, die insbesondere zur Aufnahme einer gewindeten Stange 51 eines Fusses 50 entsprechend Fig. 9 ausgestaltet ist. Anstelle des hohlen Knotens 1 könnte auch ein Vollmaterialelement mit entsprechenden Hohlräumen mit Hinterschneidungen Verwendung finden.

Durch die im Ausführungsbeispiel achteckigen Flächen 2 bilden sich bei dem Knoten 1 Durchbrüche 8, die von einem Dreieck berandet sind, dessen Kanten aus den Kanten 6 der Flächen 2 gebildet sind. Zusätzlich weisen die Flächen 2 im Bereiche ihrer Kanten 5 noch eine Nut 9 auf, die seitlich zwischen zwei Flächen 2 angesiedelt ist.

Die Fig. 2 zeigt eine bekannte Profilleiste 21 mit einem eingeschobenen Verschluss 90, dessen Betätigungsknopf 93 seitlich aus einer entsprechenden Bohrung herausragt. Nun wird zur Befestigung die Profilleiste 21 mit ihrem einen Ende 22 seitlich auf eine Fläche 2 eines Knotens 1 so aufgesetzt, dass die Klemmhaken 91 und 92 in einen Schlitz 3 oder 4 eingreifen. Durch Anziehen des Betätigungsknopfes 93, wozu bei Fig. 8 weitere Erläuterungen stehen, hintergreifen die Klemmhaken 91 und 92 den Schlitz 3 oder 4 und verbinden in lösbarer aber fester Weise die Profilleiste 21 mit dem Knoten 1. Anstelle eines Verschlusses 90 kann auch jeder andere Verschluss eingesetzt werden, bei dem Haken ein- oder beidseitig eine Bohrung oder Schlitz hintergreifen. Auch ist die Ausgestaltung der Profilleiste 21 willkürlich. Vorteilhafter Weise sind zwar Nuten 23 für Wandelemente parallel Hauptebene zur Profilleiste 21 und Nuten 24 für Wandelemente senkrecht zur Hauptebene zur Profilleiste 21 vorgesehen, jedoch können hier auch andere Ausgestaltungen vorgesehen sein und auch die Breite der Profilleiste 21 ist wählbar. Hier wird vorteilhafter Weise beispielsweise die Hälfte des Durchmessers des Knotens 1 gewählt.

Die Fig. 3 zeigt eine andere Ausgestaltung einer Profilleiste 25, bei der zwei Hohlräume zur Aufnahme von zwei Verschlüssen 90 vorgesehen sind. Wie in allen Fig. der vorliegenden Patentanmeldung sind gleiche Merkmale mit gleichen Bezugszeichen ausgestattet. Hier wird zur Befestigung die Profilleiste 25 mit ihrem einen Ende 22 punktsymmetrisch auf eine Fläche 2 eines Knotens 1 so aufgesetzt, dass die Klemmhaken 91 und 92 jeden Verschlusses 90 in jeweils einen Schlitz 3 oder 4 eingreifen, die jeweils punktsymmetrisch zu der Bohrung 7 gegenüberliegen. Durch diese symmetrische Verriegelung können erhebliche Kräfte und Momente übertragen werden.

Die Fig. 4 zeigt eine Draufsicht auf einen Knoten 1 und damit insbesondere eine Fläche 2. Es ist durch die quadratische Aussenform des Knotens 1 in der Draufsicht klar die Würfelform desselben zu erkennen, die an den Ecken durch die Durchbrüche 8 lediglich abgeschnitten ist. Die Schlitze 3 und 4 stehen im Winkel von 45 Grad zueinander und sind ansonsten in ihren Ausmassen identisch. Entsprechend den Haken 91 und 92 und deren Form ist die Länge und Breite ausgestaltet und kann den Erfordernissen nach abgeändert werden, um mit anderen Verschlüssen 90 verwendet werden zu können. Der Abstand jeden Schlitzes 3 und 4 vom Zentrum der Fläche 2 ist durch das Mass der Profilleisten 21 bzw. 25 oder anderen zu verwendenden Profilleisten vorgegeben.

Die Fig. 5 zeigt eine Fläche 2 in Alleinstellung. Der Knoten 1 besteht beispielsweise aus Metall, insbesondere rostfreiem Stahl, und kann beispielsweise eine Dicke von 1 bis 5 Millimeter aufweisen. Mit der zuletzt genannten Dicke sind dann auch tragende Skelettstrukturen für einen zwei Etagen umfassenden Aufbau beispielsweise eines Messestandes machbar.

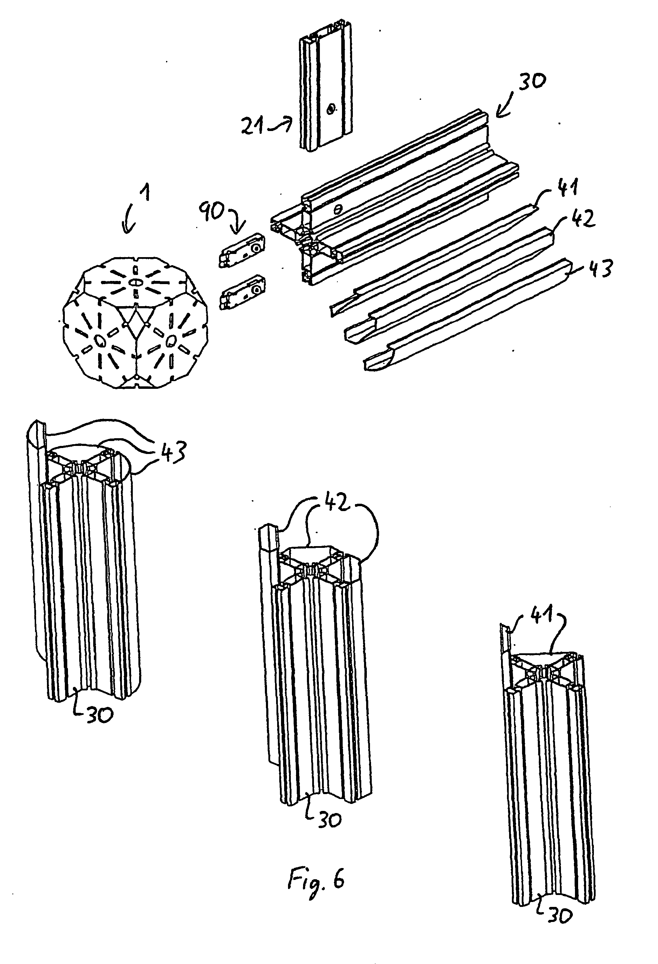

Die Fig. 6 zeigt eine Explosionsansicht verschiedener mit dem Knoten 1 zu kombinierender Profilelemente. Insbesondere wird eine neuartige kreuzförmige Profilleiste 30 dargestellt, die insbesondere im Zusammenhang mit den Fig. 7 und 10 näher erläutert wird. Die Verschlüsse 90 sind in entsprechende Aufnahmen der Profilleiste 30 eingeschoben. In dem dargestellten Ausführungsbeispiel sind zwei einander gegenüberliegende Schlitze 3 mit den Haken der Verschlüsse 90 belegt. Es können aber auch alle vier Aufnahmen in der kreuzförmigen Profilleiste 30 mit Verschlüssen 90 belegt sein, so dass die kreuzförmige Profilleiste 30 über alle vier Schlitze 3 des Knotens 1 mit diesem verbunden wird, was zu einer hervorragenden Stabilität führt.

In einem in den Zeichnungen nicht dargestellten Anwendungsfall können die kreuzförmigen Profilleisten 30 auch in einem Winkel von 45 Grad zu dem Knoten eingesetzt werden und dann greifen die zwei oder vier Verschlüsse 90 in zwei oder vier der Schlitze 4 des Knotens 1 ein.

Hierzu gehören auch Klemmprofile 41, 42 und 43, die in der Fig. 10 vergrössert dargestellt sind. In den unteren drei Darstellungen einer weiteren Profilleiste 30. Es ist klar erkennbar, dass mit den Klemmprofilen 41, 42 und 43 die Aussenkanten der kreuzförmigen Profilleiste 30 kaschiert werden können und somit eine Säulenstruktur ermöglichen. Weiterhin können aber auch die in der kreuzförmigen Profilleiste 30 vorgesehenen Nuten zur Aufnahme von Wandelementen oder eben auch zur Aufnahme von weiteren Profilleisten, hier 21 dienen.

Die Fig. 7 zeigt weitere Einsatzmöglichkeiten für den Knoten 1. Es sind an zwei benachbarten Flächen 2 weitere Profilleisten 30 befestigt. Dann kann in deren Endnuten 23 eine Spannfläche 95 eingezogen werden, die einen Sichtschutz in einer im Gewicht sehr leichten Ausführung ermöglicht. Weiterhin gestatten die Durchbrüche 8 das Befestigen eines Halteelementes 96, an der dann eine Spannstange oder ein Spannseil 97 befestigt werden kann. In dem in der Fig. 7 dargestellten Knoten 1 ist an den Seitenkanten 6 jeweils eine mittige Nut 10 vorgesehen.

Die Fig. 8 zeigt einen bekannten Verschluss 90, wie er beispielsweise in der WO97/25536 der Anmelderin beschrieben ist. Dieser wird nur beispielhaft erwähnt und ist ein besonders geeigneter Verschluss für die Verbindung von Knoten 1 und Profilleiste 21, 22 oder 30. Es können aber auch andere Verschlüsse eingesetzt werden.

Die Fig. 9 zeigt einen Fuss 50 zur Verbindung mit einem Knoten 1 nach Fig. 1 zum Aufstellen auf einem Boden. Dabei besteht der Fuss 50 aus einer Bodenplatte 52, auf der zentral eine Gewindestange 51 befestigt ist. Aus optischen Gründen ist die Bodenplatte 52 vorzugsweise ein Achteck wie die Grundfläche 2 des Knotens 1. Auf die Gewindestange 51 ist eine Arretierungsplatte 53, ebenfalls vorzugsweise achteckig, aufgeschraubt. Diese Arretierungsplatte 53 weist eine Bohrung auf, die ein Gewinde zur Aufnahme der Gewindestange 51 umfasst. Vorteilhafterweise sind auch der Arretierungsplatte 53 ein oder mehrere Erhebungen 54 vorgesehen, die derart angeordnet sind, um in die Schlitze 3 oder 4 aufgenommen zu werden. Damit kann ein Knoten 1 mit der Bohrung 7 auf die Gewindestange 51 aufgesetzt werden und auf der Arretierungsplatte 53 einrasten. Durch Verdrehen der Bodenplatte 52 gegenüber der Arretierungsplatte 53 wird diese ihren Abstand zur Bodenplatte 52 verändern und somit den auf dieser Arretierungsplatte 53 aufsitzenden Knoten 1 erhöhen oder erniedrigen. Damit ist eine Nivelliermöglichkeit gegeben. Anstelle eines Innengewindes auf der Arretierungsplatte 53 oder anstelle der Arretierungsplatte 53 selber kann auch eine Mutter vorgesehen sein, um einen auf dieser aufsitzenden Knoten in seiner Höhe zu verstellen.

Die Fig. 10 zeigt eine weitere Profilleiste 30 mit Klemmprofilen 41, 42 und 43 nach Fig. 6 in einer vergrösserten Draufsicht. Die Profilleiste 30 ist eine bevorzugte Ausführungsform mit vier Hohlräumen 31 zur Aufnahme von Verschlüssen 90. Vorzugsweise werden zwei einander gegenüberliegende oder alle vier Hohlräume eingesetzt. Die Nuten 23 und 24 entsprechen den Nuten bei den Profilleisten 21 bzw. 22 nach Fig. 2 bzw. Fig. 3. Es ist klar zu erkennen, dass die Klemmprofile 41, 42 und 43 einen den Formensinn und nach Oberflächenfarbe auch den Farbensinn des Menschen ansprechenden Mittelteil 45 aufweisen, der an seinen Seitenrändern 46 in einen sich an die Profilleiste 30 anlehnenden Abstützabschnitt 47 mit einem in die Nut 24 eingreifenden Hakenabschnitt 48 übergeht. Dabei ist die Höhe des Abstützabschnittes 47 vorzugsweise so gewählt, dass der Seitenrand 46 von der Nutöffnung quer bündig abgeht und der Haken greift in die zentrumsferne Kante der Nut 24 ein.

In das Zentrum 32 kann in einer in der Zeichnung nicht dargestellten Ausführungsform eine Verstärkungsstange eingeschoben werden, die beispielsweise durch die Öffnung 7 in der Fläche 2 hindurchtritt und dort befestigt wird.

Vorzugsweise wird die Verstärkungsstange dann in einem Gewinde in dem Zentrum 32 festgeschraubt. Vorteilhafter Weise ist zwischen zwei Armen 33 der kreuzförmigen Profilleiste 30 eine weitere Nut 34 in einem 45 Grad-Winkel vorgesehen. Diese kann durch die Klemmprofile 41, 42 oder 43 abgedeckt oder direkt mit einer Leiste, z.B. 21, oder einer Wandfläche, z.B. 95 belegt werden.

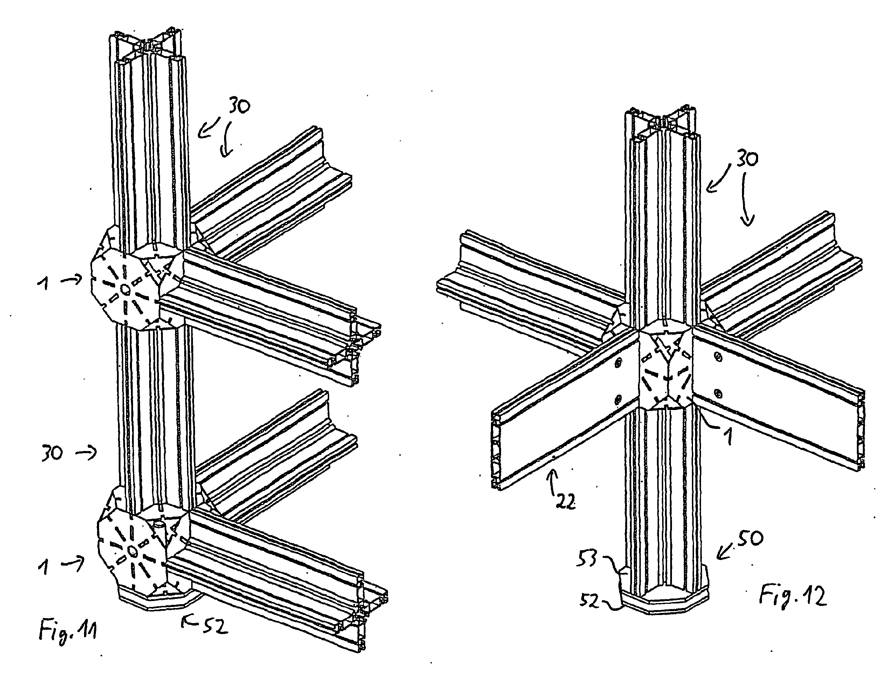

Die Fig. 11 zeigt eine Teilansicht einer Raumstruktur mit zwei dargestellten Knoten 1. Der untere Knoten 1 sitzt direkt auf dem Fuss 50 auf. Als Eckelement gehen zwei Profilleisten 30 im Winkel von 90 Grad ab und es ist eine senkrecht stehende Profilleiste 30 vorgesehen. In einer vorgegebenen Höhe ist ein zweiter Knoten 1 vorgesehen, von dem weitere Profilleisten 30 in denselben Winkeln abgehen. Zwischen einzelnen Profilleisten 30 könnten Wandelemente eingesetzt werden. Die Abstände der Knoten 1 voneinander oder deren Anzahl sind nach dem gewünschten optischen und statischen Ergebnis der Skelettstruktur zu bemessen.

Die Fig. 12 schliesslich zeigt eine Teilansicht einer Raumstruktur mit einem, einen dargestellten Knoten aufweisenden Pfosten. Hier ruht eine Profilleiste 30 auf der oberen Platte 53 des Fusses 50. An dem Knoten 1 sind drei weitere kreuzförmige Profilleisten 30 und zwei Profilleisten 22 nach Fig. 3 befestigt.

Mit diesen Elementen Knoten 1 und kreuzförmigen Profilleisten 30 sind sehr modulare, stabile und in Verbindung mit den Profilen 41, 42 und 43 auch optisch ansprechende Bausysteme erstellbar, bei denen die Knoten 1 jeweils einen optisch ansprechenden Abschluss an den Ecken der Skelettstruktur bilden.

## Patentansprüche

1. Fuß (50) zur Verwendung mit einem würfelförmigen Profilelement (1), **dadurch gekennzeichnet, dass** er über zwei deckungsgleiche achteckige Platten (52 und 53) verfügt, wobei an der unteren Bodenplatte (52), eine Gewindestange (51) befestigt ist, dass die obere der Platten (53) eine zentrale Bohrung mit einem Innengewinde aufweist, so dass diese auf die Gewindestange (51) aufschraubbar ist, dass die obere der Platten (53) über mindestens einen Rasthaken (54) verfügt, der in einen vorbestimmten Schlitz (3 oder 4) eines würfelförmigen Profilelementes (1) einrastbar ist, um durch ein Drehen der Platten (52 und 53) gegeneinander eine Höheneinstellung des würfelförmigen Profilelementes (1) gegenüber dem Boden zu ermöglichen, auf dem sich die Bodenplatte (52) des Fusses (50) abstützt.

2. Fuß nach Anspruch 1 mit dem würfelförmigen Profilement (1), **dadurch gekennzeichnet, dass** das würfelförmiges Profilelement (1) mit sechs gleichen Seitenflächen (2), in denen jeweils mindestens zwei Schlitze (3 bzw. 4) vorgesehen sind, die einander diametral gegenüber bezüglich der Symmetrieachse der Seitenfläche (2) angeordnet sind, durch die sich hinter die Seitenfläche (2) einhakbare Verschlusselemente (90; 91, 92) einführbar sind.

3. Fuß nach Anspruch 1 mit dem würfelförmigen Profilement (1) oder nach 2, **dadurch gekennzeichnet, dass** das in dem Prorilelement (1) in jeder Seitenfläche acht in einem Winkel von 45 Grad um die Symmetrieachse der Seitenfläche (2) zueinander angeordnete Schlitze (3 und 4) und/oder eine zentrale Bohrung (7) vorgesehen sind.

4. Fuß nach einem der vorhergehenden Ansprüche mit dem würfelformigen Profilelement (1) **dadurch gekennzeichnet, dass** das Profilelement (1) hohl und aus sechs identischen, die Seitenflächen bildenden Platten (2) zusammengesetzt ist.

5. Fuß nach Anspruch 4, **dadurch gekennzeichnet, dass** jede Platte (2) achteckig mit Kanten (5 und 6) ausgestaltet ist, wobei alternierend nur jede zweite Kante (5) einer Platte (2) mit der korrespondierenden Kante einer benachbarten Platte (2) zusammenst ößt und die anderen Kanten (6) jeweils einen Durchbruch (8) an den Ecken des würfelförmigen Profilelementes (1) bilden.

## Claims

1. Foot (50) for use with a cube-like profile element (1), **characterized in that** it has two congruent octagonal plates (52 and 53), wherein a threaded rod (51) is fastened on the lower, base plate (52), and that the upper of the two plates (53) has a central bore with an internal thread, and therefore this plate can be screwed onto the threaded rod (51), and **in that** the upper of the two plates (53) has at least one latching hook (54) which can be latched into a predetermined slot (3 or 4) of a cube-like profile element (1) in order to make it possible, by virtue of the plates (52 and 53) being rotated in relation to one another, for the cube-like profile element (1) to be adjusted in height in relation to the floor on which the base plate (52) of the foot (50) is supported.

2. Foot according to Claim 1 with the cube-like profile element (1), **characterized in that** a cube-like profile element (1) has six identical side surfaces (2), in which there are in each case at least two slots (3 and 4) which are arranged diametrically opposite one another in relation to the axis symmetry of the side surface (2) and through which can be introduced closure elements (90; 91, 92) which can be hooked in behind the side surface (2).

3. Foot according to Claim 1 with the cube-like profile element (1) or according to Claim 2, **characterized in that** the profile element (1), in each surface, contains eight slots (3 and 4), which are arranged at an angle of 45 degrees in relation to one another about the axis of symmetry of the side surface (2), and/or a central bore (7).

4. Foot according to one of the preceding claims with the cube-like profile element (1), **characterized in that** the profile element (1) is hollow and is made up of six identical plates (2) which form the side surfaces.

5. Foot according to Claim 4, **characterized in that** each plate (2) is configured to be octagonal with edges (5 and 6), wherein, in alternating fashion, only every second edge (5) of a plate (2) butts against the corresponding edge of an adjacent plate (2), and the other edges (6) each form a through-passage (8) at the corners of the cube-like profile element (1).

## Revendications

1. Pied (50) destiné à l'utilisation avec un élément profilé en forme de cube (1), **caractérisé en ce qu'**il dispose de deux plaques octogonales (52 et 53) en coïncidence, une tige filetée (51) étant fixée sur la plaque de sol inférieure (52), **en ce que** la plaque supérieure (53) des plaques présente un alésage central avec un filetage interne, de sorte que celle-ci puisse être vissée sur la tige filetée (51), **en ce que** la plaque supérieure (53) des plaques dispose d'au moins un crochet d'encliquetage (54), qui peut être encliqueté dans une fente prédéterminée (3 ou 4) d'un élément profilé en forme de cube (1), afin de permettre, par une rotation des plaques (52 et 53) l'une par rapport à l'autre, un ajustement en hauteur de l'élément profilé en forme de cube (1) par rapport au sol, sur lequel s'appuie la plaque de sol (52) du pied (50).

2. Pied selon la revendication 1 avec l'élément profilé en forme de cube (1), **caractérisé en ce que** l'élément profilé en forme de cube (1) est muni de six faces latérales identiques (2), dans lesquelles sont prévues à chaque fois au moins deux fentes (3 ou 4), qui sont disposées de manière diamétralement opposée par rapport à l'axe de symétrie de la face latérale (2), à travers lesquelles peuvent être insérés des éléments de fermeture (90 ; 91, 92) pouvant s'accrocher derrière la face latérale (2).

3. Pied selon la revendication 1 avec l'élément profilé en forme de cube (1), ou selon la revendication 2, **caractérisé en ce que** dans l'élément profilé (1), dans chaque face latérale, sont prévus huit fentes (3 et 4), disposées suivant un angle de 45 degrés les unes par rapport aux autres autour de l'axe de symétrie de la face latérale (2), et/ou un alésage central (7).

4. Pied selon l'une quelconque des revendications précédentes avec l'élément profilé en forme de cube (1), **caractérisé en ce que** l'élément profilé (1) est creux et est assemblé à partir de six plaques identiques (2) formant les faces latérales.

5. Pied selon la revendication 4, **caractérisé en ce que** chaque plaque (2) est configurée avec 8 coins avec des arêtes (5 et 6), seulement une arête sur deux (5) d'une plaque (2) butant en alternance contre l'arête correspondante d'une plaque adjacente (2), et les autres arêtes (6) formant à chaque fois une ouverture (8) au niveau des coins de l'élément profilé en forme de cube (1).
